# EUROPEAN PATENT SPECIFICATION

(11) **EP 4 620 356 B1**
(45) Date of publication and mention of the grant of the patent: **02.09.2026**
(21) Application number: 24164992.0
(22) Date of filing: 21.03.2024
(51) Int. Cl.: A47J 31/02, A47J 31/06

(54) **COFFEE DRIP BAG**
KAFFEETROPFBEUTEL
SACHET D'ÉGOUTTAGE DE CAFÉ

(43) Date of publication of application: 24.09.2025
(73) Proprietor: Coffee n Do Co., Ltd., Gwangju-si, Gyeonggi-do 12774 (KR)
(72) Inventor: Lee, Eui Sun, 17033 Gyeonggi-do (KR); Lee, Jung Young, 17033 Gyeonggi-do (KR)
(74) Representative: RGTH

(56) References cited:
- KR-A- 20210 054 282
- KR-B1- 102 560 405
- US-A1- 2020 140 186
- US-A1- 2023 355 027

## Description

### [Technical Field]

The present disclosure relates to a coffee drip bag.

### [Description of the Related Art]

Currently, coffee is a favorite food used by many people from young people to older people, and there are various kinds of coffee such as instant coffee like mixed coffee and bean coffee using coffee beans.

Among them, they prefer coffee made by grinding coffee beans directly in terms of flavor and luxury as well as its taste and aroma.

However, instant coffee may be enjoyed simply by pouring disposable coffee into a cup and mixing it with only hot water, as most of the disposable coffee bags are placed in the office or at home, or may be carried regardless of the place, while bean coffee is made by mixing the undiluted solution of coffee extracted using a coffee bean extractor with an appropriate amount of water, which is not easy for the general public to use because the work to extract the undiluted solution of coffee beans is cumbersome and such coffee beans extractors are quite expensive.

In order to solve this matter, the applicant has developed and proposed a coffee drip bag in Korean Patent Application Publication No. 10-2016-0085565 (prior art). The coffee drip bag in the prior art has the effect that the drinker may easily and conveniently drink high-quality bean coffee with a simple configuration.

However, the coffee drip bag in the prior art has a configuration in which the latching design portion and the lid are connected via a perforated line, and there is a difficulty in the process of forming a separate perforated line between them. In addition, since the coffee drip bag in the prior art has to form a handle separately on the lid, the manufacturing process of the lid is complicated and has limitations in designing the lid in various ways. Furthermore, coffee drip bags in the prior art have the disadvantage of having a latching portion that is pressed against the top surface of the coffee cup, which prevents the air inside the coffee cup from escaping easily and results in a slow or poor drip.

Further, KR 10-2560405 B1 discloses a coffee filtering filter having a filter portion and a latching portion for mounting on a coffee cup, and describes an air discharge means formed at the latching portion. KR 2021 0054282 A discloses a beverage drip bag having a support wing with an opening hole and an observation portion, wherein in such a direct-visual-check configuration, heat inside the cup is discharged to the outside during dripping. US 2020/0140186 A1 discloses a ground coffee drip bag including a filter part, a hung part coupled to an upper portion of the filter part and having a central opening, and a lid part inserted into and fixed to the opening of the hung part. The hung part is formed from circular cardboard and may include a first hung member and a second hung member disposed on opposite sides of the filter part upper portion, with PET coating layers that are thermally bonded to adhere the hung part to the filter part. Moreover, US 2023/355027 A1 discloses a coffee drip bag including a filter portion, a latching portion fixing the filter portion, and a lid portion shielding an opening portion of the latching portion. US 2023/355027 A1 further discloses that the filter portion may form an overlap region by folding at the portion abutting against the latching portion, to improve durability at the bent coupling region.

### [Disclosure of the Invention]

### [Technical Goals]

The present disclosure was proposed to solve the above matters, and an aspect of the present disclosure is to provide a coffee drip bag that is easy to manufacture while improving user convenience.

Also, an aspect of the present disclosure is to provide a coffee drip bag that may be modified or applied in a more diverse manner in the process of manufacturing.

Also, an aspect of the present disclosure is to provide a coffee drip bag with good environmental affinity using an environmentally friendly material.

Furthermore, an aspect of the present disclosure is to provide a coffee drip bag that allows the air inside the coffee cup to escape easily to facilitate a smooth drip.

### [Technical Solutions]

A coffee drip bag according to an example embodiment of the present disclosure for solving the above-described matter includes a filter portion that accommodates coffee while an upper portion is opened, and a latching portion formed in the center with an opening portion through which hot water flows in, engaging and fixing the filter portion along a periphery of the opening portion and being mounted on an upper end portion of the coffee cup, and the latching portion forms a vent hole through which the air inside the coffee cup is discharged.

Furthermore, the vent hole is formed by removing some of lower surface of the latching part which fits against the upper end of the coffee cup.

Further, the filter portion forms an overlap region at the portion bending to be coupled to the latching portion.

Further, the coffee drip bag may further include a lid portion that is coupled to a top surface of the latching portion while covering the opening portion, and the lid portion may be coupled to the latching portion while forming a bonding line around the opening portion.

The lid portion or the latching portion may also include a cutting line formed along a side of the bonding line.

Further, the lid portion may form a perforated line in which multiple holes are formed discontinuously and an incision portion in an inner region of the perforated line.

In addition, the perforated line may be formed such that the line is concave or convex to form a press portion on the inside or the outside.

### [Effects]

The coffee drip bag of the present example embodiment is harmless to the human body by using an eco-friendly paper material and can provide excellent environmental affinity.

In addition, the coffee drip bag of the present example embodiment can be designed variously into the shape of the lid portion or implemented with an image on the surface of the lid portion, and can be variously utilized for advertising or promotional purposes.

In addition, the coffee drip bag of the present example embodiment can be easily separated while the lid portion is stably engaged, thereby greatly improving the safety and convenience of use.

In addition, the coffee drip bag of the present example embodiment can have high durability with the folded portion of the filter portion having an overlapping structure.

Furthermore, the coffee drip bag of the present example embodiment may have a vent hole formed in the latching portion to facilitate dripping.

### [Brief Description of the Drawings]

FIG. 1 is a perspective view of a coffee drip bag according to an example embodiment of the present disclosure.
FIG. 2 is a plan view of the drip bag of FIG. 1.
FIG. 3 is a cross-sectional view of the drip bag of FIG. 2 in an I-I direction.
FIG. 4 is a plan view of another example of a drip bag of FIG. 1.
FIG. 5 is a cross-sectional view of the drip bag of FIG. 4 in an II-II direction.
FIG. 6 is a bottom perspective view of a coffee drip bag according to another example embodiment of the present disclosure.
FIG. 7 is a cross-sectional view of the coffee drip bag of FIG. 6 in an III-III direction.
FIG. 8 is a plan view of a coffee drip bag according to another example embodiment of the present disclosure.

### [Detailed Description for Carrying Out the Invention]

The technical matters achieved by the present disclosure and the practice of the present disclosure will become apparent by the preferred example embodiments described below. Preferred example embodiments of the disclosure will now be discussed in detail with reference to the accompanying drawings.

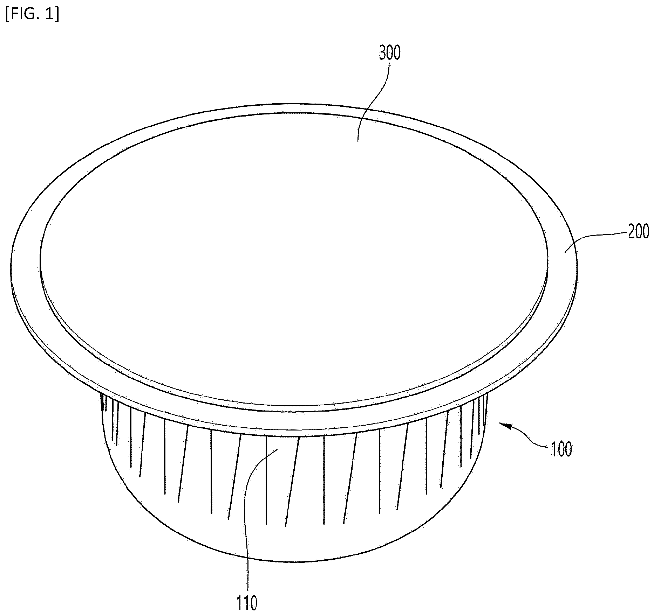

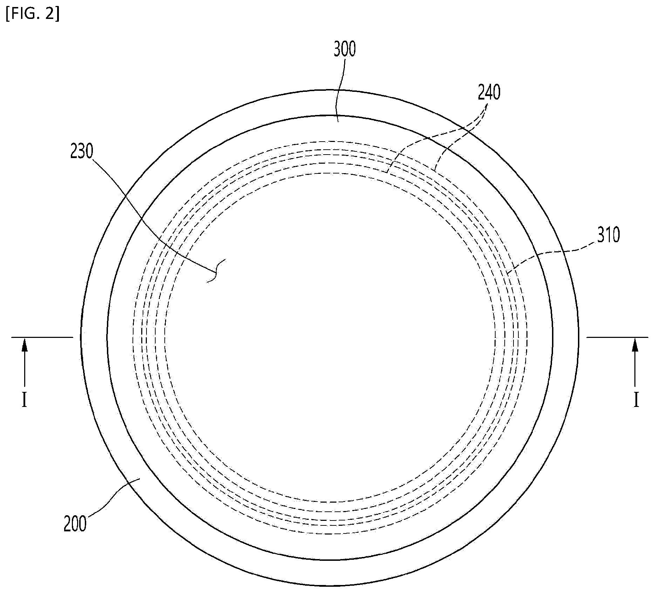

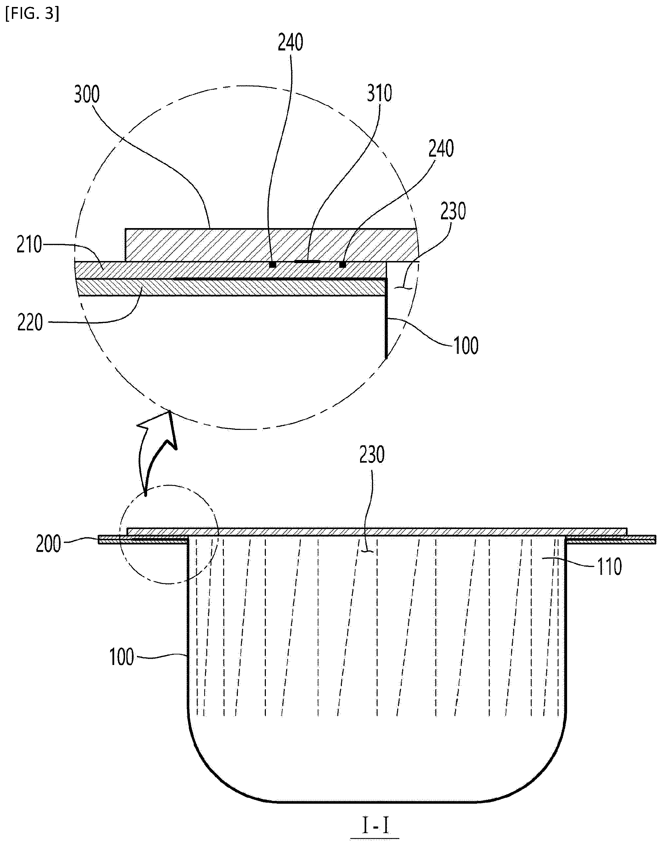

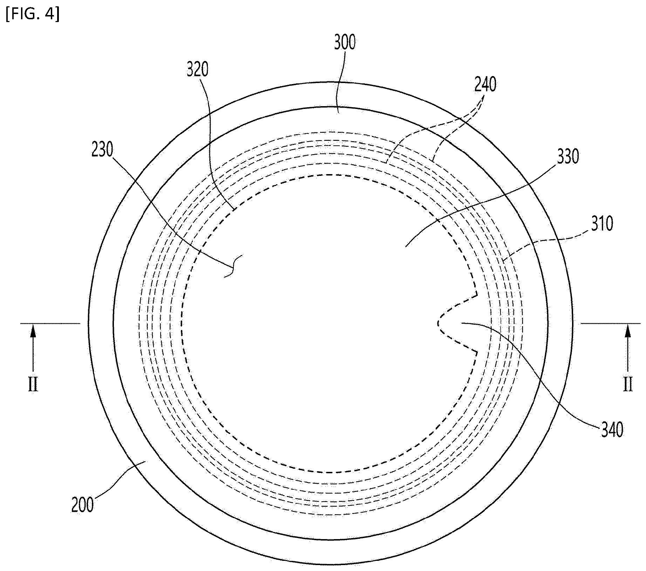

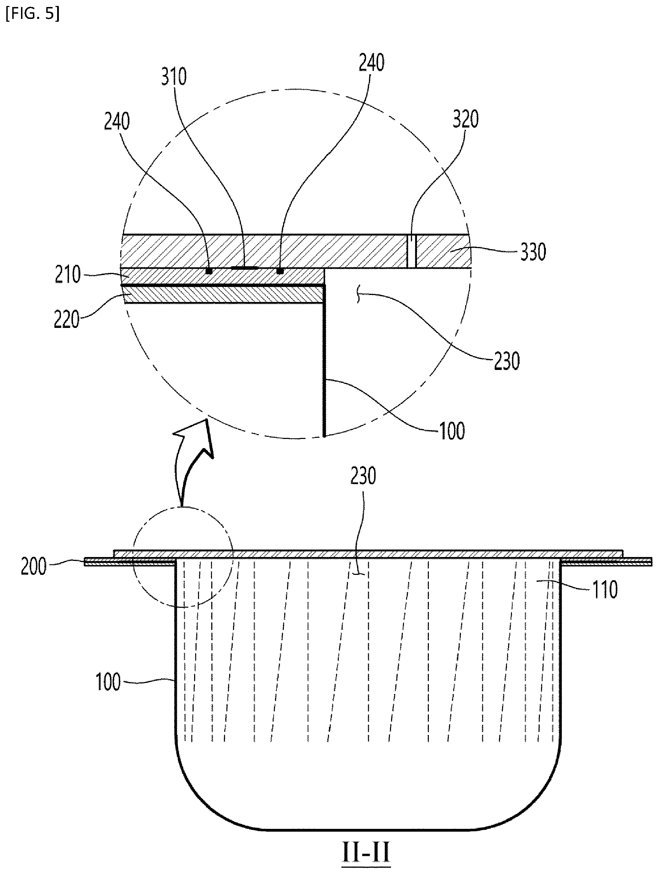

FIG. 1 is a perspective view of a coffee drip bag, FIG. 2 is a plan view of the drip bag of FIG. 1, FIG. 3 is a cross-sectional view of the drip bag of FIG. 2 in the I-I direction, FIG. 4 is a plan view of another example of a drip bag of FIG. 1, and FIG. 5 is a cross-sectional view of the drip bag of FIG. 4 in the II-II direction in accordance with an example embodiment of the present disclosure.

As shown in these figures, the coffee drip bag of the present example embodiment includes a filter portion 100, a latching portion 200 to which the filter portion is fixed, and a lid portion 300 to shield an opening portion of the latching portion.

The filter portion 100 has a pocket shape in which the top surface is opened so that the ground beans can be filled and received therein. The filter portion 100 drips hot water so that coffee can be filtered and flowed down to the bottom, and may be made of paper material that is harmless to the human body, and may have a mesh or porous structure.

The filter portion 100 is supported by the upper end coupled to the latching portion 200, and the portion abutting against the latching portion 200 forms the overlap region 110 by folding. The filter portion 100 is bonded to the latching portion 200 while the upper end portion is bent in the horizontal direction, and the portion in contact with the latching portion 200 is relatively degraded in durability due to the deformation that is bent, so that it can be easily broken or torn. However, the durability to the bent portion is improved when bent while forming the overlap region 110 as in the present example embodiment.

The latching portion 200 is configured to hang on the upper end of the coffee cup so that the coffee drip bag can be mounted on the coffee cup, and the filter portion 100 is engaged and fixed on the lower surface, and the lid portion 300 is engaged on the upper surface. The diameter of the latching portion 200 for this purpose is formed to be larger than the upper end diameter of the coffee cup so that the latching portion 200 can be latched and mounted on the upper end of the coffee cup. The latching portion 200 may be made of paperboard of an eco-friendly material.

Further, the latching portion 200 may generally have a circular shape corresponding to the opening shape of the coffee cup, and a circular opening portion 230 having a predetermined diameter is formed in the central portion. The latching portion 200 thus forms a circular flange shape having a predetermined width. The opening portion 230 communicates between the inside and the outside of the filter portion 100 so that the ground beans are filled and hot water can be dripped.

Further, the latching portion 200 couples the filter portion 100 along the edge of the opening portion 230 and causes the filter portion 100 to be located inside the coffee cup when mounted on the coffee cup. The latching portion 200 is made of a circular cardboard having an opening portion 230 formed in the center, and may include a first latching member 210 on the top and a second latching member 220 on the bottom so as to be able to couple the filter portion 100 to the center.

The first latching member 210 presses the upper surface of the filter portion 100, and the second latching member 220 presses the lower surface of the filter portion 100 so that the filter portion 100 is engaged therebetween. To this end, a polyethylene terephthalate (PET) coating layer may be applied to the lower surface of the first latching member 210 and the upper surface of the second latching member 220, and the filter portion 100 may be bonded by thermal fusion using a PET coating layer.

The lid portion 300 is coupled to the upper surface of the latching portion 200 while shielding the opening portion 230 of the latching portion 200. The lid portion 300 thus forms a plate shape having at least a larger diameter than the opening portion 230.

The lid portion 300 is composed of paperboard made of paper used for food and beverages, and can form a variety of shapes with a diameter larger than the opening portion 230 in shortest diameter. Although the circular lid portion 300 is illustrated in the present example embodiment, various shapes may be made such as a coffee bean shape, a star shape, a sunflower shape, a square shape, etc. Further, although not shown, an advertising design may be printed on the surface of the lid portion 300.

As such, the lid portion 300 of the present example embodiment can be manufactured in various shapes separately from the latching portion 200, and an image can be printed on the surface, so that the design of the coffee drip bag can be selected in more various ways. Further, the lid portion 300 can manufacture an eco-friendly coffee drip bag by using a paper material.

This lid portion 300 is bonded to the latching portion 200 by a thermal bonding process. To this end, the upper surface of the latching portion 200 or the lower surface of the lid portion 300 is coated with a resin layer harmless to the human body. The lid portion 300 is adhered to the latching portion 200 with instantaneous thermal adhesion applied along the periphery of the opening portion 230 while resting on top of the latching portion 200 to shield the opening portion 230. At this time, thermal bonding may be applied circularly along the periphery of the opening portion 230, and a circular bonding line 310 is formed. Thus, the lid portion 300 and the latching portion 200 are bonded along the bonding line 310 around the opening portion 230, and the bonding line 310 seals the filter portion 100 from the outside between the lid portion 300 and the latching portion 200. At this time, the bonding line 310 may be formed continuous or discontinuous.

Further, the lid portion 300 is further formed with a bonding spot (not shown) bonded to the latching portion 200 in an edge region outside the bonding line 310. The bonding spots are formed in a plurality at a predetermined spacing along a circumference in an edge region of the lid portion 300, and thermally bond the lid portion 300 and the latching portion 200 in a spot structure. The bonding spot prevents the end of the lid portion 300 from unfolding from the latching portion 200 due to external interference, and at the same time, keeps the non-adhesive state between neighboring bonding spots, so that the user can easily detach the lid portion 300.

In this way, the lid portion 300 of the present example embodiment is applied with the first bond of the line structure and the second bond of the spot structure, so that the lid portion 300 and the latching portion 200 can be easily separated while stable bonding is achieved, thereby improving ease of use.

Further, the coffee drip bag of the present example embodiment has a cutting line 240 formed on the side of the bonding line 310. The cutting line 240 may be formed by applying a half cutting to the surface of the latching portion 200. Further, the cutting lines 240 may be formed on the inner or outer sides of the bonding line 310 or both sides. In addition, the cutting line 240 may be formed with continuous or discontinuous application of half cutting. That is, the cutting line 240 may be a continuous line shape or a discontinuous dotted line shape.

This cutting line 240 blocks the phenomenon of the latching portion 200 or the surface of the lid portion 300 being torn by the bonding line 310 when the lid portion 300 is separated from the latching portion 200. The lid portion 300 and the latching portion 200 are made of eco-friendly paper material and are bonded along the bonding line 310. Thus, when the lid portion 300 and the latching portion 200 are separated, the surface of the latching portion 200 can be separated while being torn together by the adhesive force of the bonding line 310. However, in the case where the cutting line 240 is formed on the side of the bonding line 310 as in the present example embodiment, even if the surface of the latching portion 200 is torn, the phenomenon of tearing at the cutting line 240 is blocked to prevent irregular tearing.

Such a cutting line 240 has illustrated a configuration formed on a surface of the latching portion 200 (that is, a top surface of the latching portion), but may be formed on a surface of the lid portion (that is, a bottom surface of the lid portion) or both.

On the other hand, referring to FIGS. 4 and 5, the coffee drip bag of the present example embodiment forms an incision portion 330 in its inner region while a perforated line 320 is formed in the lid portion 300. The perforated line 320 is formed in the area of the opening portion 230 and serves to separate the incision portion 330 from the lid portion 300 along the perforated line 320 to open the filter portion 100.

The perforated line 320 may be formed by a number of holes through which the lid portion 300 is discontinuously penetrated. The perforated line 320 may have various shapes, such as a circular shape, a square shape, and the shape is not limited, and it would be desirable to have a shape corresponding to the shape of the opening portion 230. In addition, the perforated line 320 may have a closed circular shape or a rectangular shape, and may be configured to be formed only in some areas, such as a 'c' shape.

In addition, the perforated line 320 protrudes concavely or convexly in one side region, forming a press portion 340 on the inside or outside of the perforated line 320. The user can easily separate the entire incision portion 330 from the lid portion 300 by first pressing the press portion 340 to separate the incision portion 330 along the perforated line 320.

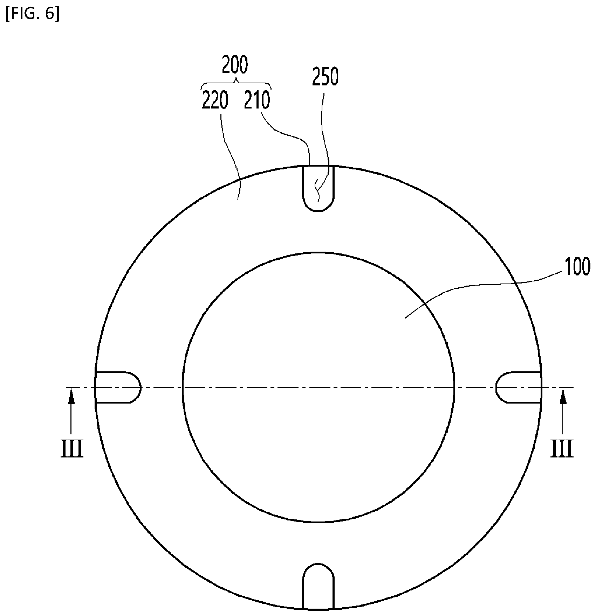

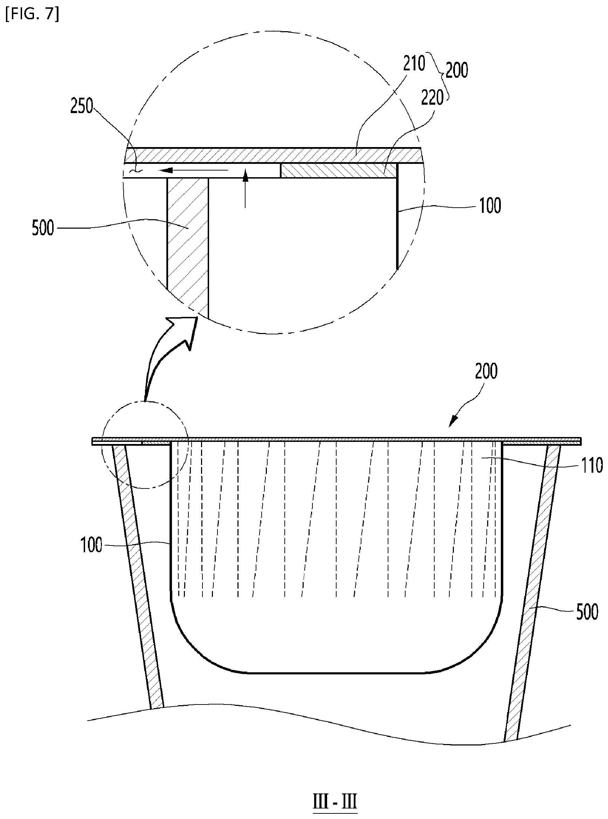

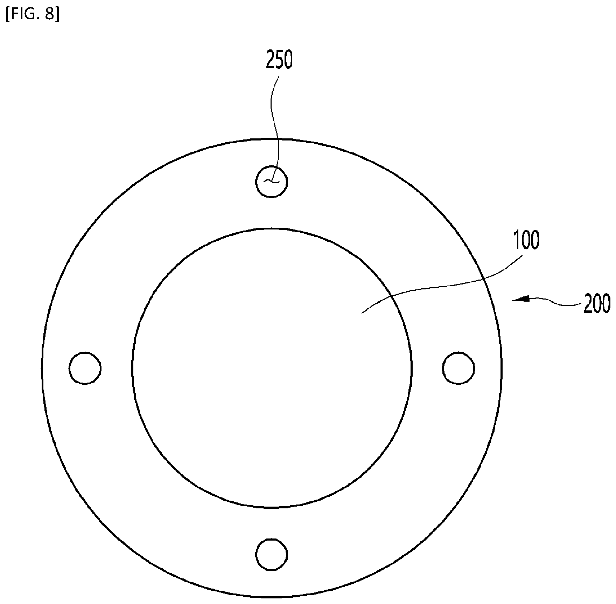

FIG. 6 is a bottom perspective view of a coffee drip bag according to another example embodiment of the present disclosure, FIG. 7 is a cross-sectional view of the coffee drip bag of FIG. 6 in an III-III direction, and FIG. 8 is a plan view of a coffee drip bag according to another example embodiment of the present disclosure.

The coffee drip bag according to this example embodiment has a vent hole 250 formed in the latching portion 200. The vent hole 250 allows air inside the coffee cup 500 to escape to the outside, allowing the drip to occur at a desired rate. In the coffee drip bag, the drip is proceeded with the latching portion 200 hanging over the top of the coffee cup 500, and the steam generated during the drip causes a lower surface of the latching portion 200 and the upper end of the coffee cup 500 to adhere to each other, sealing the inside and outside of the coffee cup 500. In this case, air or steam inside the coffee cup 500 may not be able to escape to the outside, which may result in poor drip from the filter portion 100. Thus, by forming a vent hole 250 in the latching portion 200 to connect the inside and outside of the coffee cup 500, air and steam inside the coffee cup 500 may easily escape to the outside during drip to facilitate drip.

The vent hole 250 in this example embodiment may be formed in the second latching member 220. Referring to FIG. 6, the latching portion 200 comprises the first latching member 210 of upper part and the second latching member 220 of lower part, wherein a lower surface of the latching portion 200 is formed by, for example, removing a portion of the second latching member 220. In other words, the second latching member 220 forms a groove that is removed inwardly from the outer end to a predetermined width, and the groove forms a vent hole 250 on the lower surface of the latching member 200 with a height corresponding to the thickness of the second latching member 220. Thus, as shown in FIG. 7, air or steam inside the coffee cup 500 may escape to the outside through the vent hole 250 formed between the upper end of the coffee cup 500 and the lower surface of the latching portion. The vent hole 250 may be formed in plurality at predetermined intervals along the circumferential direction of the latching portion 200.

Additionally, the vent hole 250 may be formed in the shape of a hole that penetrates the edge of the latching portion 200 in an upward and downward direction. In other words, as shown in Figure 8, the vent hole 250 may be formed through both the first latching member 210 and the second latching member 220.While exemplary example embodiments of the disclosure have been shown and described as described above, various modifications and other example embodiments may be made by those skilled in the art. These modifications and other example embodiments are all contemplated and included in the appended claims without departing from the scope of the disclosure.

## Claims

1. A coffee drip bag comprising:
a filter portion (100) that accommodates coffee while an upper portion is opened; and
a latching portion (200),
wherein in the center of the latching portion (200) an opening portion (230) is formed through which hot water is able to flow in, and
wherein the latching portion (200) is configured to engage and fix the filter portion (100) along a periphery of the opening portion (230) and to be mounted on an upper end portion of a coffee cup (500),
wherein the filter portion (100) is supported by the upper end coupled to the latching portion (200), and the portion abutting against the latching portion (200) forms an overlap region (110) by folding,
wherein the latching portion (200) includes a first latching member (210) as upper part and a second latching member (220) as lower part,
wherein the first latching member (210) is configured to press the upper surface of the filter portion (100) and the second latching member (220) is configured to press the lower surface of the filter portion (100) so that the filter portion (100) is engaged therebetween,
wherein the latching portion (200) forms a vent hole (250) through which the air inside the coffee cup (500) is dischargeable,
**characterized in that** the second latching member (220) forms a groove that is formed recessed inwardly from the outer end to a predetermined width, and the groove forms the vent hole (250) on the lower surface of the latching member (200) with a height corresponding to the thickness of the second latching member (220) which fits against the upper end of the coffee cup (500).

2. The coffee drip bag according to claim 1, further comprising:
a lid portion (300) that is coupled to a top surface of the latching portion (200) while covering the opening portion (230),
wherein the lid portion (300) is coupled to the latching portion (200) while forming a bonding line (310) around the opening portion (230).

3. The coffee drip bag according to claim 2,
wherein the lid portion (300) or the latching portion (200) comprises a cutting line (240) formed along a side of the bonding line (310).

4. The coffee drip bag according to claim 3,
wherein the lid portion (300) forms a perforated line (320) in which multiple holes are formed discontinuously and an incision portion (330) in an inner region of the perforate line (320).

5. The coffee drip bag according to claim 4,
wherein the perforated line (320) is formed such that a line is concave or convex to form a press portion (340) on an inner or outside.

## Patentansprüche

1. Kaffeetropfbeutel, umfassend:
ein Filterteil (100), das Kaffee aufnimmt, während ein oberer Bereich geöffnet ist; und
ein Halteteil (200),
wobei im Zentrum des Halteteils (200) ein Öffnungsteil (230) ausgebildet ist, durch das heißes Wasser einströmen kann, und
wobei das Halteteil (200) dazu ausgebildet ist, das Filterteil (100) entlang eines Umfangs des Öffnungsteils (230) zu erfassen und zu fixieren sowie an einem oberen Endabschnitt einer Kaffeetasse (500) montiert zu werden,
wobei das Filterteil (100) mit seinem oberen, mit dem Halteteil (200) gekoppelten Ende abgestützt wird, und der an das Halteteil (200) angrenzende Abschnitt durch Falten einen Überlappungsbereich (110) bildet,
wobei das Halteteil (200) ein erstes Halteelement (210) als oberen Teil und ein zweites Halteelement (220) als unteren Teil aufweist,
wobei das erste Halteelement (210) dazu ausgebildet ist, die obere Oberfläche des Filterteils (100) zu drücken, und das zweite Halteelement (220) dazu ausgebildet ist, die untere Oberfläche des Filterteils (100) zu drücken, sodass das Filterteil (100) dazwischen gehalten wird,
wobei das Halteteil (200) ein Entlüftungsloch (250) bildet, durch das die im Inneren der Kaffeetasse (500) befindliche Luft abführbar ist,
**dadurch gekennzeichnet, dass** das zweite Halteelement (220) eine Nut bildet, die von dem äußeren Ende aus nach innen mit einer vorbestimmten Breite ausgespart ist, und die Nut das Entlüftungsloch (250) an der unteren Oberfläche des Halteteils (200) mit einer Höhe bildet, die der Dicke des zweiten Halteelements (220) entspricht, welches an dem oberen Endabschnitt der Kaffeetasse (500) anliegt.

2. Kaffeetropfbeutel nach Anspruch 1, ferner umfassend:
ein Deckelteil (300), das mit einer Oberseite des Halteteils (200) gekoppelt ist und dabei das Öffnungsteil (230) abdeckt,
wobei das Deckelteil (300) mit dem Halteteil (200) gekoppelt ist, während es eine Verbindungslinie (310) um das Öffnungsteil (230) herum bildet.

3. Kaffeetropfbeutel nach Anspruch 2,
wobei das Deckelteil (300) oder das Halteteil (200) eine Schnittlinie (240) umfasst, die entlang einer Seite der Verbindungslinie (310) ausgebildet ist.

4. Kaffeetropfbeutel nach Anspruch 3,
wobei das Deckelteil (300) eine Perforationslinie (320), in der mehrere Löcher diskontinuierlich ausgebildet sind, und einen Einschnittabschnitt (330) in einem inneren Bereich der Perforationslinie (320) bildet.

5. Kaffeetropfbeutel nach Anspruch 4,
wobei die Perforationslinie (320) derart ausgebildet ist, dass eine Linie konkav oder konvex verläuft, um einen Druckabschnitt (340) an einer Innen- oder Außenseite zu bilden.

## Revendications

1. Sachet filtrant à café, comprenant:
une partie filtrante (100) qui reçoit du café, une partie supérieure étant ouverte ; et
une partie de maintien (200),
une partie d'ouverture (230) étant formée au centre de la partie de maintien (200), à travers laquelle de l'eau chaude peut s'écouler, et
la partie de maintien (200) étant configurée pour venir en prise avec la partie filtrante (100) et la fixer le long d'une périphérie de la partie d'ouverture (230), et pour être montée sur une partie d'extrémité supérieure d'une tasse à café (500),
la partie filtrante (100) étant supportée par son extrémité supérieure couplée à la partie de maintien (200), et la partie en butée contre la partie de maintien (200) formant une région de chevauchement (110) par pliage,
la partie de maintien (200) comprenant un premier élément de maintien (210) formant une partie supérieure et un second élément de maintien (220) formant une partie inférieure,
le premier élément de maintien (210) étant configuré pour presser la surface supérieure de la partie filtrante (100), et le second élément de maintien (220) étant configuré pour presser la surface inférieure de la partie filtrante (100), de sorte que la partie filtrante (100) est maintenue entre eux,
la partie de maintien (200) formant un trou d'évent (250) à travers lequel l'air se trouvant à l'intérieur de la tasse à café (500) peut être évacué,
**caractérisé en ce que** le second élément de maintien (220) forme une rainure évidée vers l'intérieur à partir de l'extrémité extérieure sur une largeur prédéterminée, et la rainure forme le trou d'évent (250) sur la surface inférieure de la partie de maintien (200), avec une hauteur correspondant à l'épaisseur du second élément de maintien (220), le second élément de maintien (220) étant en appui contre la partie d'extrémité supérieure de la tasse à café (500).

2. Sachet filtrant à café selon la revendication 1, comprenant en outre:
une partie de couvercle (300) qui est couplée à une surface supérieure de la partie de maintien (200) tout en recouvrant la partie d'ouverture (230),
la partie de couvercle (300) étant couplée à la partie de maintien (200) tout en formant une ligne de liaison (310) autour de la partie d'ouverture (230).

3. Sachet filtrant à café selon la revendication 2,
dans lequel la partie de couvercle (300) ou la partie de maintien (200) comprend une ligne de coupe (240) formée le long d'un côté de la ligne de liaison (310).

4. Sachet filtrant à café selon la revendication 3,
dans lequel la partie de couvercle (300) forme une ligne de perforation (320) dans laquelle plusieurs trous sont formés de manière discontinue, ainsi qu'une partie d'incision (330) dans une région intérieure de la ligne de perforation (320).

5. Sachet filtrant à café selon la revendication 4,
dans lequel la ligne de perforation (320) est formée de manière à présenter un tracé concave ou convexe afin de former une partie de pression (340) sur un côté intérieur ou extérieur.
